# FASCICULE DE BREVET EUROPEEN

(11) **EP 1 334 877 B1**
(45) Date de publication et mention de la délivrance du brevet: **06.04.2005**
(21) Numéro de dépôt: 03290296.7
(22) Date de dépôt: 06.02.2003
(51) Int. Cl.: B60R 11/02

(54) **Kit de branchement de téléphone sur un véhicule**
Telefonanschlussbausatz in einem Fahrzeug
Telephone connection kit in a vehicle

(30) Priorité: 06.02.2002 FR 0201402
(43) Date de publication de la demande: 13.08.2003
(73) Titulaire: Renault s.a.s., 92100 Boulogne Billancourt (FR)
(72) Inventeur: Billard, Xavier, 78990 Elancourt (FR); Oudenard, Laurent, 92500 Rueil Malmaison (FR)

(56) Documents cités:
- DE-U- 20 018 891
- DE-U- 29 912 359
- DE-U- 29 922 381
- US-A- 5 971 242
- US-A- 6 138 041

## Description

La présente invention concerne un kit de branchement de téléphone sur un véhicule automobile.

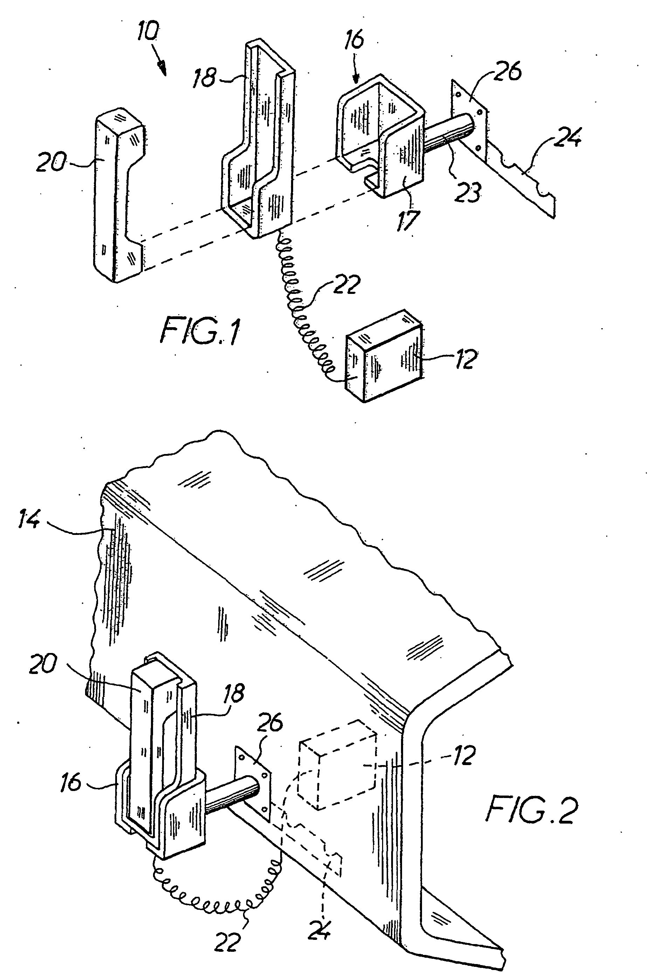

Avant d'expliquer l'invention, on commencera par décrire un exemple de réalisation de kit de branchement de téléphone selon la technique antérieure et l'on se reportera pour cela aux figures 1 et 2 annexées qui représentent respectivement, de façon très schématique, une vue en perspective explosée du kit de branchement connu et une vue en perspective avec arrachement partiel du kit à l'état assemblé.

Sur les figures 1 et 2, le kit de branchement 10 comprend un boîtier récepteur qui est généralement fixé en un endroit où il n'est pas visible, par exemple derrière la planche de bord 14 du véhicule. Il comprend également un support 16 constitué d'une portion réceptacle 17 fixée à un bras 23. Sur la portion réceptacle peut être posée de façon amovible une base de téléphone 18, laquelle peut recevoir elle-même un combiné 20. La base est reliée électriquement au boîtier récepteur par un cordon 22.

Le support 16 est généralement fixé sur la planche de bord, à portée de la main du conducteur. La fixation est indémontable de l'extérieur, et est réalisée par le constructeur lors du montage du véhicule. A cet effet, à l'extrémité du bras 23 du support sont rigidement fixées une plaque 24 en forme de bande allongée et une plaquette 26. La plaque 24 est fixée sur la face arrière de la planche de bord et est conformée pour s'ancrer sur un élément de structure du véhicule, tandis que la plaquette 26 est fixée sur la face avant de la planche de bord au moyen de vis.

Toutefois, ce kit selon la technique connue présente plusieurs inconvénients :
le constructeur doit développer une plaque en forme de bande spécifique pour chaque modèle de voiture, car la structure se trouvant à l'arrière de la planche de bord diffère d'un modèle de voiture à l'autre ;
la fixation de la plaque et de la plaquette est une opération qui nécessite une main-d'oeuvre spécialisée, coûteuse en dépense et en temps ;
comme le montre la figure 2, les vis de fixation de la plaque sont visibles de l'intérieur de l'habitacle et ont un effet négatif sur l'esthétique de la planche de bord ;
le cordon 22 sort par un orifice à travers la planche de bord pour se raccorder à la base, et de ce fait il pend de façon inesthétique sur le devant de la planche de bord;
lorsqu'une voiture équipée d'un support de téléphone est vendue en seconde main et que, comme c'est souvent le cas, le téléphone de l'acquéreur n'est pas compatible avec le support qui est en place, il est nécessaire de démonter ce support pour monter à la place celui de l'acquéreur, ce qui est une opération compliquée qui nécessite de démonter la planche de bord ;
ce dernier problème se rencontre également lorsque, à l'intérieur d'une même famille, les personnes qui utilisent le véhicule possèdent des téléphones de marques différentes. Ces personnes ne pourront pas toutes utiliser leur téléphone avec le support qui est monté sur le véhicule, car les connexions sont en général différentes d'un téléphone à l'autre.

Un kit de branchement avec les caractéristiques du préambule de la revendication 1 est connu du document DE 29 912 359 U1.

La présente invention vise à remédier à tous ces inconvénients des kits de téléphone de véhicule connus et, à cet effet, elle concerne un kit de branchement de téléphone sur un véhicule, qui se caractérise en ce qu'il comprend :
- au moins une prise mâle fixée dans un orifice percé sur une paroi du véhicule,
- un boîtier récepteur monté à l'arrière de ladite paroi,
- un moyen de liaison électrique reliant le boîtier récepteur et la prise mâle, à l'arrière de ladite paroi ,
- un support amovible comprenant un bras terminé par une prise femelle susceptible d'être enfichée dans la prise mâle et une portion réceptacle,
et un combiné.

Le combiné est posé dans ce cas sur la portion réceptacle.

Selon un autre mode de réalisation, le kit comprend en outre une base de téléphone posée sur la portion réceptacle du support, position où elle est en contact électrique avec la prise femelle, le combiné étant posé sur la base.

Le principal avantage du kit selon l'invention est que la prise mâle, le moyen de liaison électrique et le boîtier récepteur sont montés définitivement par le fabriquant sur le véhicule et sont communs à l'ensemble des véhicules d'une même marque, tandis que le support, qui est spécifique du téléphone, peut être branché et débranché très simplement, sans avoir à démonter la planche de bord comme c'était le cas dans la technique antérieure décrite ci-dessus.

Il est donc désormais loisible à une personne qui vend son véhicule de garder le support afin de l'intégrer dans un nouveau véhicule de la même marque, pré-équipé d'une prise mâle et d'un boîtier récepteur.

De même, l'acquéreur d'une voiture d'occasion trouvera celle-ci déjà équipée d'une prise mâle et d'un boîtier récepteur et n'aura plus qu'à se rendre à une concession de cette marque pour acquérir un support.

Un autre avantage du kit selon l'invention réside dans le fait que plusieurs utilisateurs d'une même voiture pourront dorénavant brancher leur propre téléphone, à condition d'utiliser un support compatible avec leur marque de téléphone.

Il va de soi que la prise mâle peut être délocalisée en n'importe quel point du véhicule. Elle peut se trouver par exemple sur le boîtier récepteur même, ou encore sur la planche de bord, ou sur une console séparant deux sièges, à l'avant ou l'arrière du véhicule, ou en tout autre endroit approprié. Il est également possible de monter plusieurs prises mâles en différents endroits de l'habitacle à la fois.

En raison de la simplicité du démontage du support, il devient possible pour le propriétaire du véhicule de retirer le support chaque fois qu'il quitte son véhicule et de se préserver ainsi contre le vol.

Un capot peut être prévu pour obturer l'ouverture de chaque prise mâle, chaque fois que le support est débranché.

Le capot peut être monté pivotant entre une position soulevée où il dégage l'ouverture dc la prise mâle et une position rabattue où il obture cette ouverture. Il peut être rappelé automatiquement à sa position fermée par des moyens ressorts, dès que le support est retiré. La fonction du capot peut être signalée par le symbole téléphone dessiné sur sa face visible. On confère ainsi en même temps une finition propre à la planche de bord.

On décrira à présent un mode de réalisation de l'invention, à titre d'exemple non limitatif, en regard des dessins annexés dans lesquels :
la figure 3 est une vue en perspective explosée des éléments du kit de branchement selon l'invention ;
la figure 4 est une vue en perspective du kit selon l'invention à l'état assemblé, monté sur la planche de bord du véhicule ; et
la figure 5 est une vue partielle de la planche de bord montrant le capot de la prise mâle en position fermée.

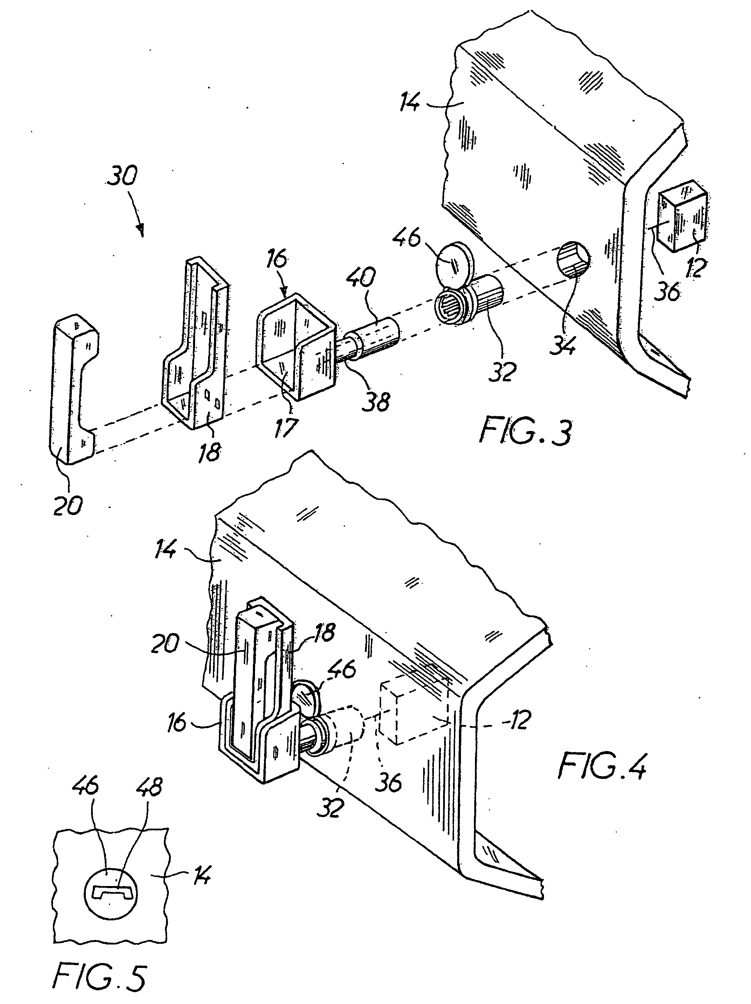

Dans la description des figures 3 ct 4 qui va suivre, on désignera les éléments du kit de l'invention par les mêmes références que celles utilisées dans les figures 1 et 2.

Le kit 30 selon l'invention comprend, comme dans le mode de réalisation précédent, un boîtier récepteur 12, un support 16, une base 18 et un combiné 20.

Les caractéristiques nouvelles du kit selon l'invention sont les suivantes :
- le kit comprend en outre une prise mâle 32 qui est fixée à demeure dans un orifice 34 percé dans la planche de bord 14 du véhicule,
- le cordon est éliminé et est remplacé par un câble de liaison 36 qui relie le boîtier récepteur 12 à la prise mâle 32, à l'arrière de la planche de bord,
- le support 16 comprend un bras 38 terminé par une prise femelle 40 qui est destinée à être enfichée dans la prise mâle 32, et une portion réceptacle 17 sur laquelle la base 18 peut être posée.

On peut noter que la base peut être omise et que le combiné peut être posé directement sur le support.

Comme le montre la figure 4, la prise mâle 32 est fixée dans l'orifice 34 de la planche de bord 14 et est reliée électriquement au boîtier récepteur 12 au moyen du câble de liaison 36. Le boîtier récepteur et le câble de liaison se trouvent à l'arrière de la planche de bord et ne sont donc pas visibles, ce qui confère un aspect propre et esthétique à la planche de bord. La connexion électrique du boîtier récepteur 12 avec la base 18 se fait par l'intermédiaire de conducteurs intégrés dans le support et qui sont donc eux aussi invisibles.

Le support est constitué à présent par une pièce amovible qui peut être détachée de la planche de bord et remise en place à volonté. Ceci est un grand avantage par rapport à la technique antérieure où il fallait démonter la planche de bord pour pouvoir détacher le support. Il en découle tous les avantages que l'on a signalés précédemment.

Comme le montrent les figures 4 et 5, la prise mâle 32 est munie au niveau de son bord extérieur d'un capot pivotant 46 destiné à obturer l'ouverture de la prise mâle lorsque le support 16 a été retiré.

Le capot peut être muni de moyens de rappel élastiques, non représentés, qui le sollicitent automatiquement vers sa position fermée (figure 5), dès que le support est débranché. Dans sa position ouverte (figure 4), le capot est maintenu fermement en appui contre le support par les moyens de rappel élastiques et est ainsi empêché de vibrer.

Sur la face extérieure du capot peut être dessiné un symbole 48 représentant le téléphone.

Il va de soi que de nombreuses modifications de détail peuvent être apportées au mode de réalisation qui a été décrit.

Ainsi, l'invention a été décrite dans le cas le plus courant où le téléphone est branché sur la planche de bord 14 du véhicule, mais il va de soi qu'il peut être placé en tout autre endroit approprié de l'habitacle, par exemple sur une console qui sépare deux sièges, à l'avant ou à l'arrière. De plus, plusieurs prises mâles peuvent être prévues sur un même véhicule, toutes étant reliées au boîtier récepteur.

La partie réceptacle 17 du support et le bras 38 du support peuvent être articulés entre eux, par exemple au moyen d'une rotule, de manière que la partie réceptacle puisse être orientée dans la direction la plus appropriée.

Dans le cas où la base 18 est omise et où le combiné est posé directement sur la partie réceptacle 17, on prévoira un support 16 pour chaque type de combiné. Enfin, la prise femelle peut être standardisée.

## Revendications

1. Kit de branchement de téléphone (30) sur un véhicule, comprenant:
- au moins une prise mâle (32) sur une paroi (14) du véhicule,
- un boîtier récepteur (12) monté à l'arrière de ladite paroi,
- un moyen de liaison électrique (36) reliant le boîtier récepteur et la prise mâle, à l'arrière de ladite paroi,
- un support amovible (16) comprenant un bras (38) terminé par une prise femelle (40) susceptible d'être enfichée dans la prise mâle et une portion réceptacle (17),
et un combiné (20), **caractérisé en ce que** la prise mâle (32) est fixée dans un orifice (34) percé sur la paroi (14).

2. Kit de branchement selon la revendication 1, **caractérisé en ce que** le combiné est posé sur la portion réceptacle du support.

3. Kit de branchement selon la revendication 1, **caractérisé en ce qu'**il comporte en outre une base de téléphone (18) pouvant être posée sur la portion réceptacle du support et être ainsi en contact électrique avec la prise femelle, le combiné étant alors posé sur la base.

4. Kit de branchement selon la revendication 1, **caractérisé en ce que** plusieurs prises mâles (32) sont fixées en plusieurs endroits du véhicule, toutes étant reliées au boîtier récepteur.

5. Kit de branchement selon la revendication 1, **caractérisé en ce qu'**un capot (46) est prévu pour obturer l'ouverture de chaque prise mâle, chaque fois que le support est débranché.

6. Kit de branchement selon la revendication 5, **caractérisé en ce que** le capot est monté pivotant entre une position soulevée où il dégage l'ouverture de la prise mâle et une position rabattue où il obture cette ouverture et **en ce que** sur la face extérieure du capot est dessiné le symbole du téléphone.

7. Kit de branchement selon la revendication 6, **caractérisé en ce que** le capot est rappelé automatiquement à sa position fermée par des moyens ressorts, dès que le support est débranché.

8. Kit de branchement selon la revendication 1, **caractérisé en ce que** la partie réceptacle (17) du support et le bras (38) du support sont articulés entre eux, par exemple au moyen d'une rotule, de manière que la partie réceptacle puisse être orientée dans la direction la plus appropriée.

## Patentansprüche

1. Telefonanschlussbausatz (30) in einem Fahrzeug, umfassend:
- mindestens einen männlichen Stecker (32),
- ein Empfangsgehäuse (12),
- ein Mittel zur elektrischen Verbindung (36), das das Empfangsgehäuse und den männlichen Stecker hinter der Wand verbindet,
- einen abnehmbaren Träger (16), der einen Arm (38) umfasst, der durch einen weiblichen Stecker (40) abgeschlossen wird, der in den männlichen Stecker gesteckt werden kann, und einen Aufnahme-Teil (17),
- und einen Hörer (20),
**dadurch gekennzeichnet, dass** das Gehäuse (12) hinter einer Wand (14) des Fahrzeugs montiert ist und dadurch, dass der männliche Stecker (32) in einer in die Wand (14) gebohrten Öffnung (34) befestigt ist.

2. Telefonanschlussbausatz gemäß Anspruch 1, **dadurch gekennzeichnet, dass** der Hörer in den Aufnahme-Teil des Trägers gesetzt ist.

3. Telefonanschlussbausatz gemäß Anspruch 1, **dadurch gekennzeichnet, dass** er darüber hinaus eine Telefonbasis (18) umfasst, die in den Aufnahme-Teil des Trägers gesetzt werden und so in elektrischem Kontakt mit dem weiblichen Stecker sein kann, wobei der Hörer dann auf die Basis gesetzt ist.

4. Telefonanschlussbausatz gemäß Anspruch 1, **dadurch gekennzeichnet, dass** mehrere männliche Stecker (32) an mehreren Stellen des Fahrzeugs befestigt sind, die alle mit dem Empfangsgehäuse verbunden sind.

5. Telefonanschlussbausatz gemäß Anspruch 1, **dadurch gekennzeichnet, dass** eine Abdeckung (46) vorgesehen ist, um die Öffnung eines jeden männlichen Steckers zu verschließen, immer wenn der Träger ausgesteckt ist.

6. Telefonanschlussbausatz gemäß Anspruch 5, **dadurch gekennzeichnet, dass** die Abdeckung schwenkbar zwischen einer angehobenen Position befestigt ist, in der sie die Öffnung des männlichen Steckers freigibt, und einer heruntergeklappten Position, in der sie diese Öffnung verschließt, und dadurch, dass auf der äußeren Seite der Abdeckung das Symbol eines Telefons gezeichnet ist.

7. Telefonanschlussbausatz gemäß Anspruch 6, **dadurch gekennzeichnet, dass** die Abdeckung automatisch in ihre geschlossene Position durch Federmittel zurückgebracht wird, sobald der Träger ausgesteckt wird.

8. Telefonanschlussbausatz gemäß Anspruch 1, **dadurch gekennzeichnet, dass** der Aufnahme-Teil (17) des Trägers und der Arm (38) des Trägers miteinander gelenkig verbunden sind, zum Beispiel mit einem Kugelgelenk, damit der Aufnahme-Teil in die am meisten geeignete Richtung ausgerichtet werden kann.

## Claims

1. A telephone connection kit (30) on a vehicle comprising:
- at least one male terminal (32),
- a receiving case (12),
- an electrical connecting means (36) connecting the receiving case and the male terminal to the rear of said wall,
- a removable support (16) comprising an arm (38) terminated by a female terminal (40) capable of being engaged into the male terminal and a receptacle portion (17), and
- a handset (20), **characterised in that**
the case (12) is mounted to the rear of a wall (14) of the vehicle and that the male terminal (32) is fixed In an orifice (34) pierced in the wall (14).

2. A connection kit according to claim 1 **characterised in that** the handset is placed on the receptacle portion of the support.

3. A connection kit according to claim 1 **characterised in that** it further comprises a telephone base (18) which can be placed on the receptacle portion of the support and can thus be in electrical contact with the female terminal, the handset then being placed on the base.

4. A connection kit according to claim 1 **characterised in that** a plurality of male terminals (32) are fixed at a plurality of locations of the vehicle, all being connected to the receiving case.

5. A connection kit according to claim 1 **characterised in that** a cap (46) is provided to close the opening of each male terminal, each time the support is disconnected.

6. A connection kit according to claim 5 **characterised in that** the cap is mounted pivotably between a raised position in which it clears the opening of the male terminal and a down position in which it closes off said opening and that the symbol of a telephone is drawn on the outward face of the cap.

7. A connection kit according to claim 6 **characterised in that** the cap is automaticatiy returned to its closed position by spring means as soon as the support is disconnected.

8. A connection kit according to claim 1 **characterised in that** the receptacle portion (17) of the support and the arm (38) of the support are pivotably connected together, for example by means of a ball joint, in such a way that the receptacle portion can be oriented in the most appropriate direction.
